# EUROPÄISCHE PATENTSCHRIFT

(11) **EP 3 989 488 B1**
(45) Veröffentlichungstag und Bekanntmachung des Hinweises auf die Patenterteilung: **25.02.2026**
(21) Anmeldenummer: 21204349.1
(22) Anmeldetag: 22.10.2021
(51) Int. Cl.: H04L 12/46, H04L 67/00, H04L 12/40

(54) **UPDATE-VERFAHREN FÜR SOFTWAREKOMPONENTEN EINES FREIZEITFAHRZEUGS**
UPDATE METHOD FOR SOFTWARE COMPONENTS OF A LEISURE VEHICLE
PROCÉDÉ DE MISE À JOUR POUR COMPOSANTS LOGICIELS D'UN VÉHICULE DE LOISIRS

(30) Priorität: 22.10.2020 DE 102020127902
(43) Veröffentlichungstag der Anmeldung: 27.04.2022
(73) Patentinhaber: Erwin Hymer Group SE, 88339 Bad Waldsee (DE)
(72) Erfinder: Strobel, Gero, 88339 Bad Waldsee (DE); Maucher, Hans-Martin, 88339 Bad Waldsee (DE); Silz, Sebastian, 88400 Biberach (DE); Caesar, Claudius, 88339 Bad Waldsee (DE)
(74) Vertreter: Müller Schupfner & Partner Patent- und Rechtsanwaltspartnerschaft mbB (Muc)

(56) Entgegenhaltungen:
- EP-A1- 2 863 303
- DE-A1- 102015 121 091

## Beschreibung

Die Erfindung betrifft ein Update-Verfahren für Softwarekomponenten eines Freizeitfahrzeug nach dem Oberbegriff des Patentanspruchs 1.

Unter einem Freizeitfahrzeug wird vorliegend ein Fahrzeug verstanden, dass zumindest mithilfe von in diesem montierbaren Einrichtungen und Möbeln dem Nutzer eine Möglichkeit zum Schlafen und Wohnen in diesem Fahrzeug bietet. Für eine anderweitige Verwendung, wenn das Fahrzeug nicht als Freizeitfahrzeug zum Campen benutzt wird, können diese Einrichtungen und Möbel zumindest zum Teil ohne großen Aufwand entfernt werden. Weiterhin umfasst der Begriff auch alle Campingfahrzeuge wie Wohnmobile und Wohnwagen, wobei eine Motorisierung der Fahrzeuge nicht zwingend erforderlich ist und ein Freizeitfahrzeug insbesondere auch einen Anhänger umfasst. Solche Freizeitfahrzeuge zeichnen sich durch einen größeren Wohnaufbau aus, wobei in der überwiegenden Anzahl der Fälle nicht die Originalkarosserie beispielsweise eines Kleintransporters zum Einsatz kommt, sondern ein größerer Aufbau von dem Hersteller des Freizeitfahrzeugs auf einem Chassis aufgebaute wird. Bei einem Wohnanhänger als Freizeitfahrzeug wird regelmäßig ein Anhängerchassis genutzt, auf dem ein Wohnaufbau speziell aufgebaut wird.

In einem solchen Freizeitfahrzeug, insbesondere als Wohnmobil, werden eine Vielzahl von Komponenten und Geräten eingesetzt, die eine eigene Software aufweisen. Solche Komponenten die teilweise eigene Software und Steuerung aufweisen können beispielsweise ein Kühlschrank und/oder eine SAT-Anlage und/oder eine Heizung und/oder ein Solarpanel und/oder eine Klimaanlage für den Wohnraum und/oder eine Heizung für den Wohnraum und/oder ein Gerät der Warmwasserheizung und/oder ein Gerät der Wasseraufbereitung bzw. Verteilung sein. Wenn eine dieser Softwarekomponenten nicht mehr aktuell ist, muss ein Update erfolgen. Bisher ist hierfür zumeist ein Aufenthalt in einer Werkstatt oder einem Servicepunkt erforderlich und wird auf das Gerät bzw. die Komponente das Update allein für diese aufgespielt.

Für die Kommunikation solcher Komponenten bei Freizeitfahrzeug ist der LIN-BUS wie auch CAN-BUS bekannt.

Nach diesem Stand der Technik können Softwarefehlfunktionen im Bereich von Freizeitfahrzeugen nicht ohne Werkstattaufenthalte behoben werden. Speziell Fehlfunktionen von Drittkomponenten, die beispielsweise zugekauft sind und nicht vom Hersteller des Fahrzeugs stammen und die über ein zentrales Steuergerät angesprochen werden, können dann oftmals nur durch diesen Dritthersteller aktualisiert werden. Softwareupdates müssen immer direkt und lokal über die Komponente erfolgen.

DE 10 2015 121 091 A betrifft die Gewährleistung der Softwarekompatibilität von Softwareupdates für eine Fahrzeugkomponente mit Softwareversionen, die in anderen Fahrzeugkomponenten installiert sind, unter anderem in Wohnmobilen. Dabei kann eine Antwort von einem Updateserver empfangen werden, die anzeigt, ob neue Softwareupdates für das Fahrzeug verfügbar sind.

EP 2 863 303 A1 betrifft ein Verfahren zum Updaten von Software eines Automobils über ein Netzwerk mit einem Update-Server.

Der vorliegenden Erfindung liegt die Aufgabe zugrunde, ein Update-Verfahren für die Software von Komponenten eines Freizeitfahrzeug zur Verfügung zu stellen, das die zuvor genannten Nachteile vermeidet und mit dem auf zuverlässige, einfache Art und Weise stets eine aktuelle Software sichergestellt werden kann.

Diese Aufgabe wird durch ein Update-Verfahren für die Software von Komponenten eines Freizeitfahrzeug mit den Merkmalen des unabhängigen Patentanspruchs 1 und eine Vorrichtung mit den Merkmalen des Patentanspruchs 4 gelöst. Vorteilhafte Weiterbildungen der Erfindung sind in den Unteransprüchen angegeben.

Die Aufgabe wird erfindungsgemäß dadurch gelöst, dass bei einem Update-Verfahren für die Software von Komponenten eines Freizeitfahrzeugs, insbesondere Wohnmobil oder Wohnanhänger, bei dem die Komponenten über ein Bussystem, insbesondere LIN/CAN-Bus, mit einer Steuereinheit verbunden sind, die Steuereinheit als Gateway mit einem Server, insbesondere einer Cloud, verbunden ist, in der Updates zur Verfügung stehen und das Gateway den Aktualisierungsstand der Software der Komponenten überprüft und im Bedarfsfall das Update herunterlädt und an die Komponenten verteilt.

Ferner wird die Aufgabe durch eine Vorrichtung, die eingerichtet ist, ein solches Update-Verfahren auszuführen, gelöst.

Über ein zentrales Gateway kann drahtlos empfangene Software via LIN/CAN-BUS an die Komponenten im Reisemobil verteilt werden. Entsprechend der abgefragten Firmwarestände können andere Softwarestände für Up- oder Downgrades aufgespielt werden. Der Abgleich der aktuell gültigen Softwareversionen erfolgt in der Cloud mit dem digitalen Zwilling des Freizeitfahrzeugs.

Es kann eine "Container in Container" Übertragung erfolgen, im 1. Schritt Cloud zu Gateway, dann Gateway zu Komponente.

Vorteilhaft ergibt sich eine kontinuierliche Verbesserung der Funktionalität des Freizeitfahrzeugs auch noch lange nach dem Erwerb. Für einen Teilbereich des Fahrzeugs, insbesondere connected Components, kann im Fehlerfall auf eine kostenintensive Rückrufaktion verzichtet werden und eine Fehlerbehebung per Update erfolgen.

Durch das Verfahren werden Aufwand und Kosten im Aftermarket reduziert. Softwareupdates können für Caravan- und Freizeitfahrzeugnutzer orts-und zeitunabhängig erfolgen. Der Nutzer des Fahrzeugs kann an seinem derzeitigen Standort verweilen und muss keine organisatorischen Maßnahmen ergreifen. Vorteilhaft handelt es sich auch um ein offenes Netzwerk. Daher sind nachträglich eingebaute Komponenten ebenfalls updatebar, wenn für das Komponentennetzwerk zertifiziert.

Es ist auch denkbar, Updates (Aktualisierungen) lokal, mit direkter Anbindung über das Gateway auszuführen.

Erfindungsgemäß ist es, dass in der Cloud ein digitales Modell des Freizeitfahrzeugs abgelegt ist dahingehend, dass zu jeder Komponente des jeweiligen Freizeitfahrzeugs die Update-Versionen bereitgestellt sind. Dadurch können in zuverlässiger Weise Updates für das jeweilige Freizeitfahrzeug veranlasst werden. Außerdem kann bestimmt werden, ob ein Update erforderlich beziehungsweise möglich ist.

Vorteilhaft ist es, dass ein Container-in-Containerverfahren verwendet wird, indem zunächst von der Cloud zum Gateway übertragen wird und dann gekapselt vom Gateway zur Komponente. Dadurch kann in zuverlässiger Weise eine gemeinsame Aktualisierung erfolgen. Dies kann auch gewährleisten, dass eine Datenintegrität beim Datenaustausch stets gewährleistet ist.

Vorteilhaft ist es, dass ein Mobiltelefon als Router zwischen einer LTE Verbindung des Mobilfunknetzes und einer BTLE bzw. Bluetooth Low Energy Verbindung mit dem Gateway eingesetzt wird. Hierdurch können zusätzliche Komponenten eingespart werden. Außerdem ist dadurch gegebenenfalls kein zusätzlicher Vertrag mit einem Mobilfunkunternehmen erforderlich, da die Daten entsprechend dem Mobilfunkvertrag des Mobiltelefons, das der Benutzer bereits unterhält, übertragen werden können. Dies vereinfacht auch die Nutzung, da der Benutzer dann, wenn er über sein Mobiltelefon Daten für andere Zwecke übertragen kann, auch das Update durchführen kann. Somit ergibt sich für den Benutzer ein intuitive Funktionsweise. Umgekehrt, wird eine Fehlersuche, zum Beispiel bei unzureichendem Mobilfunkempfang für ein spezielles Netz, vereinfacht.

Erfindungsgemäß ist es, dass eine Komponente ein Kühlschrank und/oder eine SAT-Anlage und/oder ein Solarpanel und/oder ein Gerät der Warmwasserheizung und/oder ein Gerät der Wasseraufbereitung bzw. -verteilung ist. Optional kann zusätzlich eine Komponente eine Heizung und/oder eine Klimaanlage für den Wohnraum und/oder eine Heizung für den Wohnraum sein. Das Update-Verfahren eignet sich aber auch für andere Komponenten eines Freizeitfahrzeugs.

Weitere Vorteile und Einzelheiten der Erfindung werden anhand des in der schematischen Figur dargestellten Ausführungsbeispiels näher erläutert.

Es zeigt:

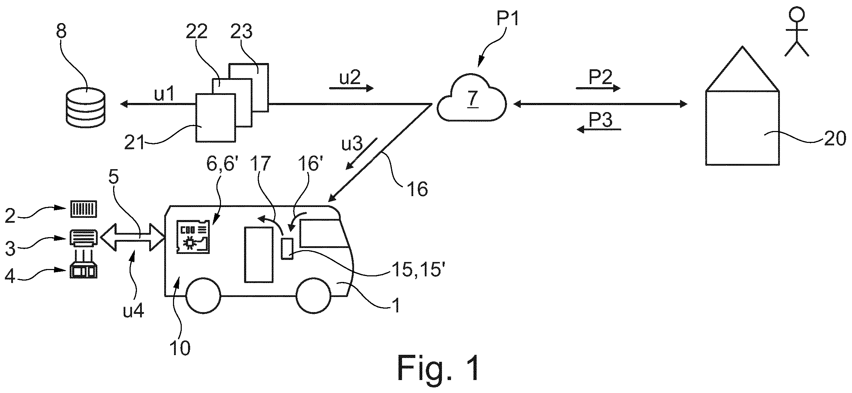

- Fig. 1: ein Schaubild zur Erläuterung eines Update-Verfahrens für die Software von Komponenten eines Freizeitfahrzeugs und eine entsprechende Vorrichtung in einer schematischen Darstellung gemäß einem Ausführungsbeispiel der Erfindung.

Fig. 1 zeigt ein Schaubild zur Erläuterung eines Update-Verfahrens für ein Freizeitfahrzeug 1 gemäß einem Ausführungsbeispiel der Erfindung, wobei das Update-Verfahren zum Aktualisieren der Software von Komponenten 2, 3, 4 des Freizeitfahrzeugs 1 dient.

Die Komponenten 2, 3, 4 können jeweils als Kühlschrank, SAT-Anlage, Heizung 2, Solarpanel, Klimaanlage 3 für den Wohnraum des Freizeitfahrzeugs 1, als Heizung für den Wohnraum, als Gerät 4 der Warmwasserheizung oder als Gerät 4 der Wasseraufbereitung bzw. -verteilung ausgebildet sein. Es sind aber auch andere Ausgestaltungen möglich.

Wenn das Update-Verfahren ausgeführt wird, dann sind die Komponenten 2, 3, 4 über ein Bussystem 5 mit einer Steuereinheit 6 verbunden. Vorzugsweise ist das Bussystem 5 als LIN/CAN-Bus des Freizeitfahrzeugs 1 ausgebildet. Die Steuereinheit 6 dient als Gateway 6' zu einem Server 7. Der Server 7 kann eine Cloud 7 realisieren. Die Cloud 7 stellt Updates 8 zur Verfügung. Das Gateway 6' überprüft den Aktualisierungsstand der Software der Komponenten 2, 3, 5. Im Bedarfsfall lädt das Gateway 6' das Update herunter und verteilt es an die Komponenten 2, 3, 4. Eine Vorrichtung 10 ist eingerichtet, das Update-Verfahren auszuführen. Die Vorrichtung 10 weist die Steuereinheit 6 beziehungsweise das Gateway 6' auf.

In der Cloud 7 ist ein digitales Modell des Freizeitfahrzeugs 1 abgelegt. In dem digitalen Modell sind zu jeder Komponente 2, 3, 4 des Freizeitfahrzeugs 1 die Update-Versionen bereitgestellt. Hierbei können für eine Vielzahl von Freizeitfahrzeugen solche digitalen Modelle bereitgestellt sein. Zur Datenübertragung wird vorzugsweise ein Container-in-Container-Verfahren eingesetzt. Hierfür erfolgt die Übertragung zunächst von der Cloud 7 zum Gateway 6' und dann gekapselt vom Gateway 6' zur jeweiligen Komponente 2, 3, 4.

Bevorzugt wird für die Verbindung 16' des Mobilfunknetzes ein Mobiltelefon 15 genutzt. Dieses Mobiltelefon 15 dient hierbei als Router 15' zwischen einer LTE Verbindung 16' des Mobilfunknetzes 16 und einer BTLE bzw. Bluetooth Low Energy Verbindung 17 mit dem Gateway 6'.

Bei einer möglichen Ausgestaltung kann ein Problemlösungszugriff durch Schritte P1, P2 und P3 charakterisiert sein. Ein Zugriff für automatische Updates (Aktualisierungen) 8 der Software der Komponenten 2, 3, 4 kann durch Schritte U1, U2, U3 und U4 charakterisiert sein.

Im Schritt P1 wird von der Cloud 7 ein Problem erkannt. Dann erfolgt im Schritt P2 eine Anfrage bei einem Entscheider 20, bei dem es sich um einen Kundendienst, einen Systemüberwachungsdienst oder einen Servicemitarbeiter handeln kann. Im Schritt P3 gibt dieser seine Zustimmung. Somit können Probleme genutzt werden, um ein Update der Software für zumindest eine der Komponenten 2, 3, 4 anzustoßen und auszuführen.

Im Schritt U1 wird ein aktueller Status für das digitale Modell, also des digitalen Zwillings, des Freizeitfahrzeugs 1 von den autonomen Updates 8 erhalten. SoftwareUpdates 21, eine Konfiguration 22 und eine Funktionsüberprüfung 23 werden dann im Schritt U2 an die Cloud 7 übermittelt. Im Schritt U3 werden die relevanten Daten von dem Gateway 6' des Freizeitfahrzeugs 1 aus der Cloud 7 heruntergeladen. Hierbei kann das Mobiltelefon 15 als Router dienen. Im Schritt U4 wird dann die jeweilige Software an die individuellen Komponenten 2, 3, 4 übertragen und dort als Update aufgespielt.

Somit kann eine kontinuierliche Verbesserung der Funktionalität des Freizeitfahrzeugs 1 auch nach der Auslieferung an den Kunden erfolgen. Im Fehlerfall kann auf kostenintensive Rückrufaktionen verzichtet werden. Außerdem kann eine Fehlerbehebung automatisiert ermöglicht werden.

Softwareupdates können für Caravan- und Freizeitfahrzeugnutzer orts- und zeitunabhängig erfolgen. Rückrufe können quasi über Nacht durchgeführt und überprüft werden. Der Kunde kann an seinem derzeitigen Standort verweilen und muss keine organisatorischen Maßnahmen ergreifen. Es kann ein offenes Netzwerk realisiert werden, bei dem nachträglich eingebaute Komponenten ebenfalls updatebar sind, wenn diese beispielsweise für das Komponentennetzwerk zertifiziert sind.

Bei einer abgewandelten Ausgestaltung können Updates zusätzlich auch lokal mit direkter Anbindung über das Gateway 6' ausgeführt werden.

Die Erfindung ist nicht auf die beschriebenen Ausführungsformen beschränkt.

## Patentansprüche

1. Update-Verfahren für die Software von Komponenten eines Freizeitfahrzeugs (1), insbesondere Wohnmobil oder Wohnanhänger, bei dem die Komponenten (2, 3, 4) über ein Bussystem (5), insbesondere einen LIN/CAN-Bus, mit einer Steuereinheit (6) verbunden sind, wobei
die Steuereinheit (6) als Gateway (6') mit einem Server (7), nämlich einer Cloud, verbunden ist, in der Updates (8) zur Verfügung stehen und das Gateway (6') den Aktualisierungsstand der Software der Komponente (2, 3, 4) beziehungsweise der Komponenten (2, 3, 4) überprüft und im Bedarfsfall das Update herunterlädt und an die Komponente (2, 3, 4) beziehungsweise an die Komponenten (2, 3, 4) verteilt,
**dadurch gekennzeichnet,**
**dass** die Komponente (2, 3, 4) beziehungsweise die Komponenten (2, 3, 4) ein Kühlschrank und/oder eine SAT-Anlage und/oder ein Solarpanel und/oder ein Gerät (4) der Warmwasserheizung und/oder ein Gerät (4) der Wasseraufbereitung bzw. -verteilung des Freizeitfahrzeugs (1) ist beziehungsweise sind und dass in der Cloud (7) ein digitales Modell des Freizeitfahrzeugs (1) abgelegt ist, in dem zu jeder Komponente (2, 3, 4) des jeweiligen Freizeitfahrzeugs (1) die Update Versionen bereitgestellt sind.

2. Update-Verfahren nach Anspruch 1,
**dadurch gekennzeichnet,**
**dass** ein Container-in-Container-Verfahren für einen Datenaustausch verwendet wird, indem zunächst von der Cloud (7) zum Gateway (6') übertragen wird und dann gekapselt vom Gateway (6') zur Komponente (2, 3, 4) beziehungsweise zu den Komponenten (2, 3, 4).

3. Update-Verfahren nach einem der vorhergehenden Ansprüche,
**dadurch gekennzeichnet,**
**dass** ein Mobiltelefon (15) als Router (15') zwischen einer LTE Verbindung (16') eines Mobilfunknetzes (16) zu der Cloud (7) und einer BTLE bzw. Bluetooth Low Energy Verbindung (17) mit dem Gateway (6') eingesetzt wird.

4. Vorrichtung (10), die eingerichtet ist, ein Update-Verfahren nach einem der vorhergehenden Ansprüche auszuführen.

## Claims

1. An update method for the software of components of a recreational vehicle (1), in particular a motorhome or caravan, in which the components (2, 3, 4) are connected via a bus system (5), in particular a LIN/CAN bus, to a control unit (6), wherein the control unit (6) is connected as a gateway (6') to a server (7), namely a cloud, in which updates (8) are available, and the gateway (6') checks the update status of the software of the component (2, 3, 4) or components (2, 3, 4) and, if necessary, downloads the update and distributes it to the component (2, 3, 4) or components (2, 3, 4),
**characterised in that**
the component (2, 3, 4) or components (2, 3, 4) are a refrigerator and/or a SAT system and/or a solar panel and/or a device (4) for hot water heating and/or a device (4) for water treatment or distribution of the recreational vehicle (1), and that a digital model of the recreational vehicle (1) is stored in the cloud (7), in which the update versions are provided for each component (2, 3, 4) of the respective recreational vehicle (1)

2. The update method according to claim 1,
**characterised in that**
a container-in-container method is used for data exchange by first transmitting from the cloud (7) to the gateway (6') and then encapsulated from the gateway (6') to the component (2, 3, 4) or the components (2, 3, 4).

3. The update method according to one of the preceding claims,
**characterised in that**
a mobile phone (15) is used as a router (15') between an LTE connection (16') of a mobile network (16) to the cloud (7) and a BTLE or Bluetooth Low Energy connection (17) with the gateway (6').

4. A device (10) configured to execute an update procedure according to one of the preceding claims.

## Revendications

1. Procédé de mise à jour du logiciel de composants d'un véhicule de loisirs (1), en particulier d'un camping-car ou d'une caravane, les composants (2, 3, 4) étant connectés par l'intermédiaire d'un système de bus (5), en particulier un bus LIN/CAN, à une unité de commande (6), dans lequel
l'unité de commande (6) est connectée comme passerelle (6') à un serveur (7), notamment un cloud, dans lequel des mises à jour (8) sont disponibles, et la passerelle (6') surveille l'état de mise à jour du logiciel du composant (2, 3, 4) ou des composants (2, 3, 4) et, en cas de besoin, télécharge la mise à jour et la distribue au composant (2, 3, 4) ou aux composants (2, 3, 4),
**caractérisé en ce que**
le composant (2, 3, 4) ou les composants (2, 3, 4) est ou sont un réfrigérateur et/ou une installation SAT et/ou un panneau solaire et/ou un appareil (4) de chauffage d'eau chaude et/ou un appareil (4) de traitement de l'eau ou de distribution de l'eau du véhicule de loisirs (1), et **en ce que**, dans le cloud (7), est stocké un modèle numérique du véhicule de loisirs (1) dans lequel les versions de mise à jour sont fournies pour chaque composant (2, 3, 4) du véhicule de loisirs respectif.

2. Procédé de mise à jour selon la revendication 1,
**caractérisé en ce que**
un procédé conteneur-dans-conteneur est utilisé pour un échange de données dans lequel la transmission s'effectue tout d'abord du cloud (7) à la passerelle (6') et puis de manière encapsulée de la passerelle (6') au composant (2, 3, 4) ou aux composants (2, 3, 4).

3. Procédé de mise à jour selon l'une des revendications précédentes,
**caractérisé en ce que**
un téléphone mobile (15) est utilisé comme routeur (15') entre une connexion LTE (16') d'un réseau de téléphonie mobile (16) vers le cloud (7) et une connexion BTLE ou Bluetooth à basse consommation (17) à la passerelle (6').

4. Dispositif (10) qui est configuré pour exécuter un procédé de mise à jour selon l'une des revendications précédentes.
